# EUROPÄISCHE PATENTSCHRIFT

(11) **EP 3 591 267 B1**
(45) Veröffentlichungstag und Bekanntmachung des Hinweises auf die Patenterteilung: **22.07.2020**
(21) Anmeldenummer: 18181240.5
(22) Anmeldetag: 02.07.2018
(51) Int. Cl.: F16K 3/08, F16K 11/074

(54) **VENTILOBERTEIL**
UPPER PART OF A VALVE
PARTIE SUPÉRIEURE DE SOUPAPE

(43) Veröffentlichungstag der Anmeldung: 08.01.2020
(73) Patentinhaber: Flühs Drehtechnik GmbH, 58515 Lüdenscheid (DE)
(72) Erfinder: Thurau Friedrich, 58849 Herscheid (DE)
(74) Vertreter: Patentanwälte Dörner & Kötter PartG mbB

(56) Entgegenhaltungen:
- DE-C2- 3 207 895
- DE-C2- 3 323 008
- DE-C2- 3 638 180
- US-A1- 2016 084 403

## Beschreibung

Die Erfindung betrifft ein Ventiloberteil, insbesondere für Sanitärarmaturen, mit einem in einem Ventilgehäuse einer Armatur befestigbaren, hülsenartigen Kopfstück, das von einer einen Griffanschluss aufweisenden, um ihre Längsachse drehbar gelagerten Spindel mittig durchsetzt ist, über die ein Ventilkörper betätigbar ist, nach dem Oberbegriff des Patentanspruchs 1.

Ventiloberteile der vorgenannten Art sind, beispielsweise aus der DE 32 07 895, der DE 33 23 008 sowie der US 2016/084403 A1 bekannt. Bei den bekannten Ventiloberteilen tritt folgende Problematik auf. Zwischen der Spindel und dem Kopfstück besteht ein geringes radiales Spiel, welches sich über den Griffanschluss auf den an diesem montierten Bediengriff überträgt, wobei bedingt durch den Hebel des Handgriffs der Eindruck eines erheblichen Spiels vermittelt wird. Weiterhin kann es bei horizontal an einer Wand montierten Armaturen, bei denen an dem Ventiloberteil ein schwerer, asymmetrisch ausgeführter Bediengriff montiert ist, durch das von diesem auf die Spindel des Ventiloberteils ausgeübte Drehmoment dazu kommen, dass bei geöffnetem Ventil der Handgriff selbsttätig aus einer radial oberen Lage in eine radial untere Lage verschwenkt.

In der DE 36 38 180 C2 wird hierzu vorgeschlagen, das Kopfstück des Ventiloberteils an der dem Griffanschluss zugewandten Innenkante mit einer ringförmigen Ausnehmung zu versehen, in die ein im Wesentlichen hülsenförmiges, vorgespanntes und begrenzt elastisches Lager in Anlage an eine der Ringflächen der Spindel des Ventiloberteils und in Rasteingriff mit einer der in die Spindel eingebrachten Nuten gepresst ist. Diese Lösung hat sich über Jahrzehnte bewährt und wird bis zum heutigen Tage realisiert. Nicht zuletzt im Zuge der zunehmenden Miniaturisierung der Ventiloberteile gestaltet sich diese Lösung jedoch sehr aufwendig. Zudem kann es bei häufiger Benutzung dazu kommen, dass das eingepresste Kunststofflager plastisch verformt wird, was sich negativ auf die Haptik bei der Bedienung des Ventiloberteils auswirkt.

Hier will die Erfindung Abhilfe schaffen. Der Erfindung liegt die Aufgabe zugrunde, ein Ventiloberteil bereitzustellen, bei dem Spiel zwischen Spindel und Kopfstück sowie ungewollte Schwenkbewegungen zwischen Spindel und Kopfstück vermieden sind, das auch bei geringen Abmessungen des Ventiloberteils einfach zu fertigen ist und bei dem auch über einen langen Zeitraum eine gleichbleibende Haptik gewährleistet ist. Gemäß der Erfindung wird diese Aufgabe durch ein Ventiloberteil mit den Merkmalen des kennzeichnenden Teils des Patentanspruchs 1 gelöst.

Mit der Erfindung ist ein Ventiloberteil geschaffen, bei dem sowohl Spiel zwischen Spindel und Kopfstück in Radialrichtung als auch ungewollte Schwenkbewegungen der Spindel in dem Kopfstück vermieden sind, das auch bei geringen Abmessungen des Ventiloberteils einfach herstellbar ist und das zudem auch über einen längeren Zeitraum eine gleichbleibende Haptik gewährleistet. Dadurch, dass in der Spindel eine Nut eingebracht ist, die eine die Spindel zumindest bereichsweise radial umgreifende, elastische Gleitbuchse aufnimmt, die zumindest bereichsweise an der Innenmantelfläche des Kopfstücks anliegt, ist die im Stand der Technik erforderliche, aufwändige Einbringung einer axialen Ausnehmung in das Kopfstück zur Aufnahme des elastischen Kunststofflagers nicht mehr erforderlich. Es wird lediglich eine weitere Nut in der Spindel zur Aufnahme der Gleithülse benötigt. Die in der Nut angeordnete, elastische Gleithülse ist dabei vollkommen elastisch zwischen Spindel und Kopfstück angeordnet, sodass irreversible, plastische Verformungen, wie sie bei dem eingepressten Kunststofflager nach dem Stand der Technik vorkommen können, vermieden sind. Bevorzugt ist die Gleitbuchse aus Kunststoff, vorzugsweise aus einem Elastomer hergestellt.

Die Gleitbuchse ist derart gewölbt, dass sie nur bereichsweise sowohl an dem Nutengrund als auch an der Innenmantelfläche des Kopfstücks anliegt. Hierdurch ist das elastische Verhalten der Gleitbuchse weiter verbessert, wodurch plastische Verformungen weiter vermieden sind. Eine auch über einen sehr langen Zeitraum gleichbleibende Haptik des Ventiloberteils ist hierdurch gewährleistet.

In Weiterbildung der Erfindung ist die Gleitbuchse geschlitzt ausgebildet. Hierdurch ist eine einfache Montage der Gleitbuchsen ermöglicht.

In Ausgestaltung der Erfindung ist die Gleitbuchse auf den Nutengrund der Nut aufclipsbar. Hierdurch ist eine einfache, automatisierte Montage der Gleitbuchse ermöglicht. Zudem ist der Einsatz von Gleitbuchsen unterschiedlicher Materialien für unterschiedliche Einsatzzwecke innerhalb eines Produktionsprozesses einfach umsetzbar.

In weiterer Ausgestaltung der Erfindung ist der Schlitz der Gleitbuchse V-förmig ausgebildet. Hierdurch ist ein einfaches Aufclipsen der Gleitbuchse auf den Nutengrund der Spindel ermöglicht, wodurch die Montage weiter vereinfacht ist.

In weiterer Ausgestaltung der Erfindung liegt die Gleitbuchse an dem Nutengrund mit einer radial umlaufenden ersten Kontaktfläche an und an der Innenmantelfläche des Kopfstücks mit wenigstens einer, bevorzugt zwei äußeren radial umlaufenden zweiten Kontaktflächen an, die axial versetzt zu der wenigstens einen ersten Kontaktfläche angeordnet sind. Hierdurch ist das elastische Verhalten der Gleitbuchse weiter verbessert. Alternativ kann die Gleitbuchse auch an der Innenmantelfläche des Kopfstücks mit einer äußeren radial umlaufenden zweiten Kontaktfläche anliegen und an dem Nutengrund mit zwei umlaufenden ersten Kontaktfläche anliegen, die axial versetzt zu der zweiten Kontaktfläche angeordnet sind. Auch eine verschachtelte Anordnung von mehreren an dem Nutengrund der Spindel und an der Innenmantelfläche des Kopfstücks anliegenden Kontaktflächen ist möglich.

In weiterer Ausgestaltung der Erfindung weist die Spindel zwei weitere, jeweils einen Dichtring aufnehmende Nuten auf, zwischen denen die eine Gleitbuchse aufnehmende Nut angeordnet ist. Hierdurch ist die Gleitbuchse zum einen gegenüber dem Trinkwasser abgeschottet, weshalb das Material für die Gleitbuchse frei wählbar ist. Zum anderen ist die Gleitbuchse gegenüber äußeren Einwirkungen, wie beispielsweise Schmutz oder auch Putzmittel abgeschirmt. Andere Weiterbildungen und Ausgestaltungen der Erfindung sind in den übrigen Unteransprüchen angegeben. Ausführungsbeispiele der Erfindung sind in den Zeichnungen dargestellt und werden nachfolgend im Einzelnen beschrieben. Es zeigen:

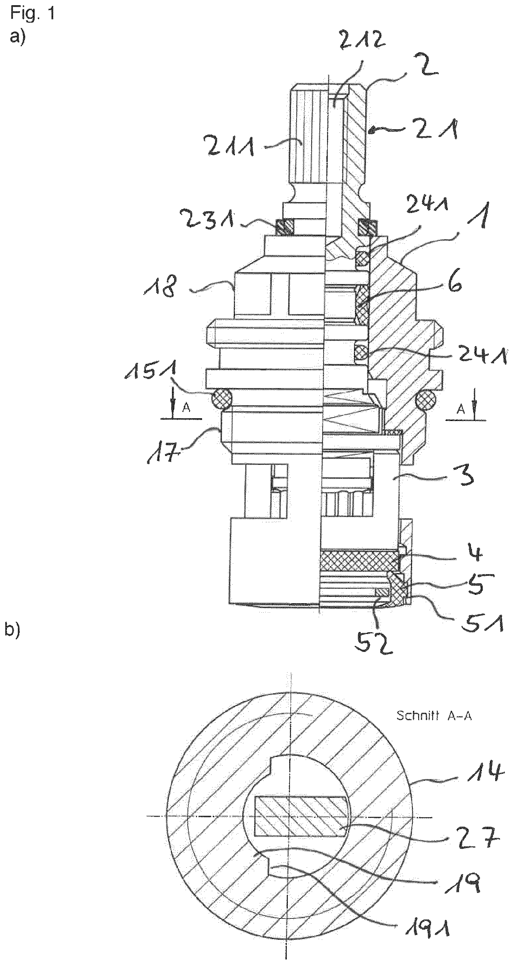

Figur 1 die schematische Darstellung eines Ventiloberteils mit Spindel in Mittelposition
   a) im Teilschnitt;
   b) im Querschnitt A-A;

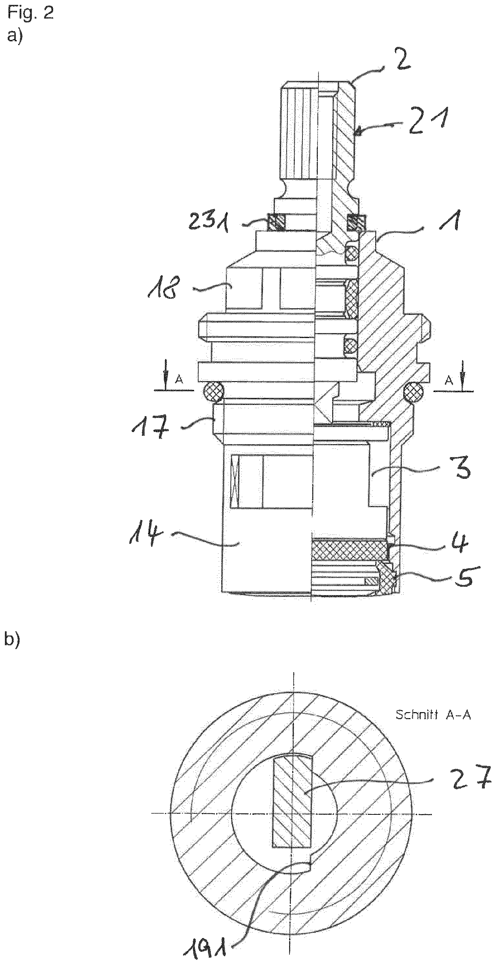

Figur 2 die schematische Darstellung des Ventiloberteils aus Figur 1 mit Spindel in Anschlagposition
   a) im Teilschnitt;
   b) im Querschnitt A-A;

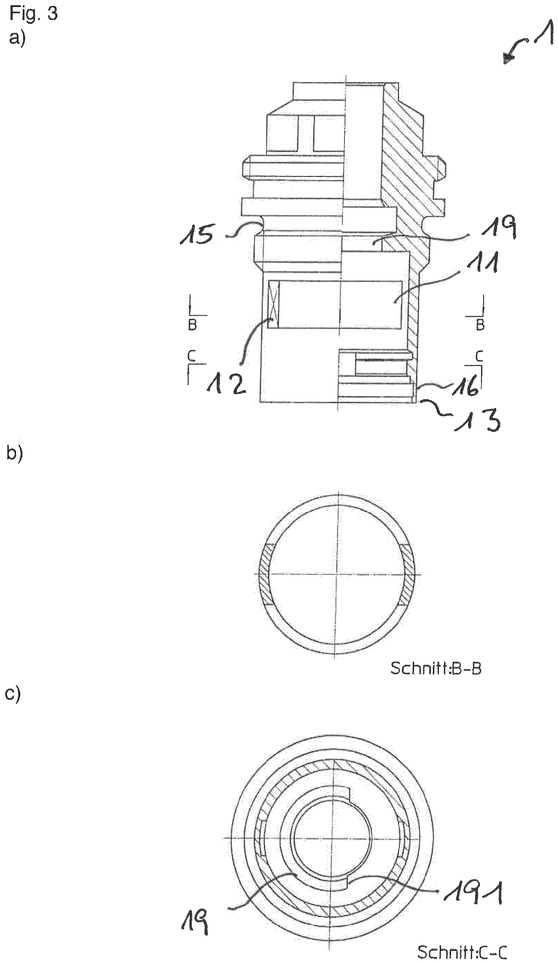

Figur 3 die schematische Darstellung des Kopfstücks des Ventiloberteils aus Figur 1
   a) im Teilschnitt;
   b) im Querschnitt B-B;
   c) im Querschnitt C-C;

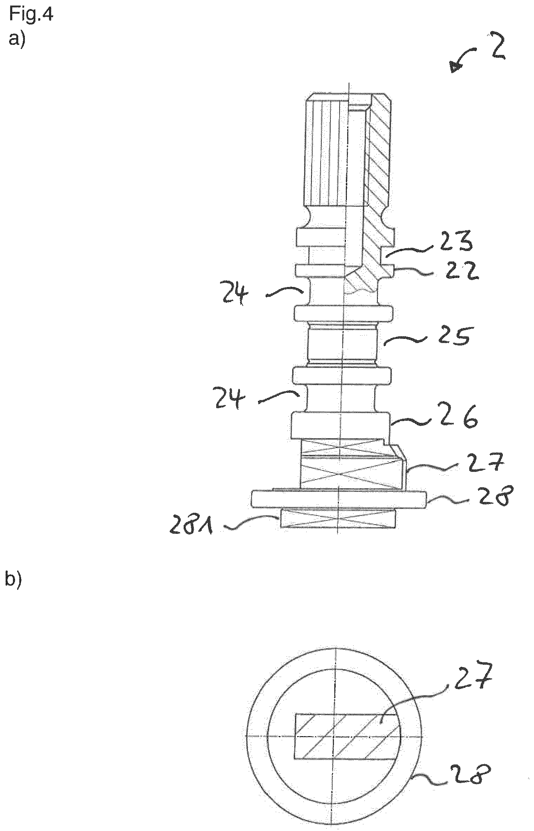

Figur 4 die schematische Darstellung der Spindel des Ventiloberteils aus Figur 1
   a) im Teilschnitt;
   b) im Querschnitt;

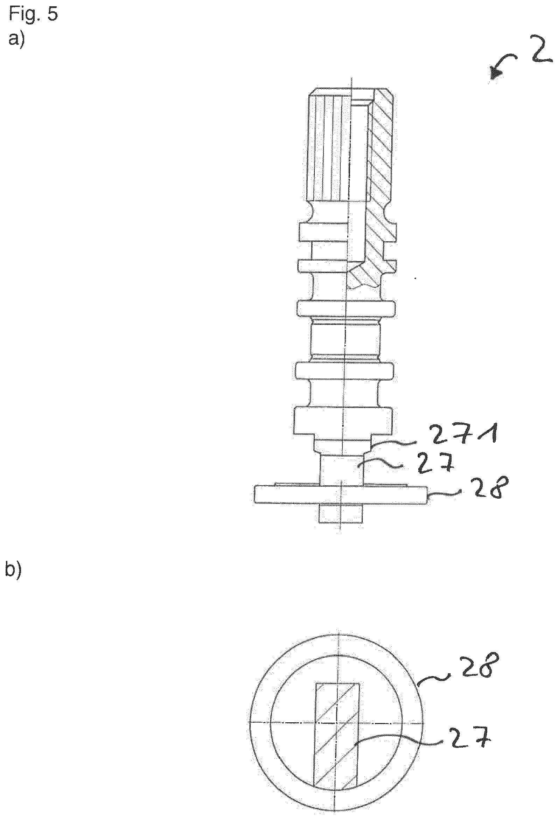

Figur 5 die schematische Darstellung der Spindel aus Figur 4 in um 90° verdrehter Position
   a) im Teilschnitt;
   b) im Querschnitt;

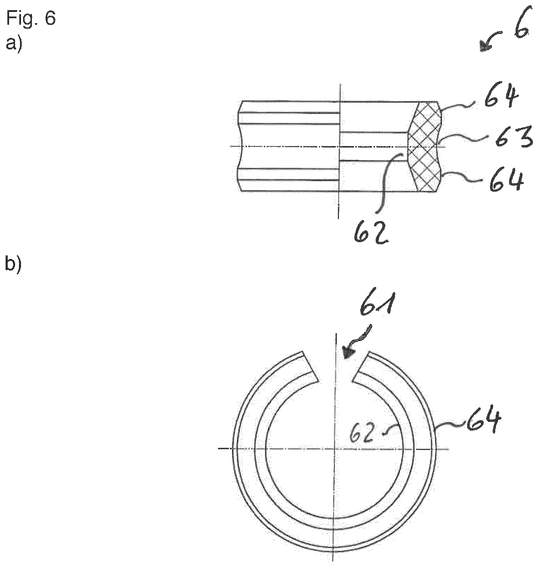

Figur 6 die schematische Darstellung der Gleithülse des Ventiloberteils aus Figur 1
   a) im Teilschnitt;
   b) in der Draufsicht;
Figur 7 die schematische Darstellung des Kopfstücks eines Ventiloberteils in einer weiteren Ausführungsform mit auf 90° begrenztem Schwenkwinkel
   a) im Teilschnitt;
   b) im Querschnitt B-B;
   c) im Querschnitt C-C;
Figur 8 die schematische Darstellung einer Spindel zum Einsatz in dem Kopfstück aus Figur 7
   a) im Teilschnitt
   b) im Querschnitt durch den Ausleger (Draufsicht),

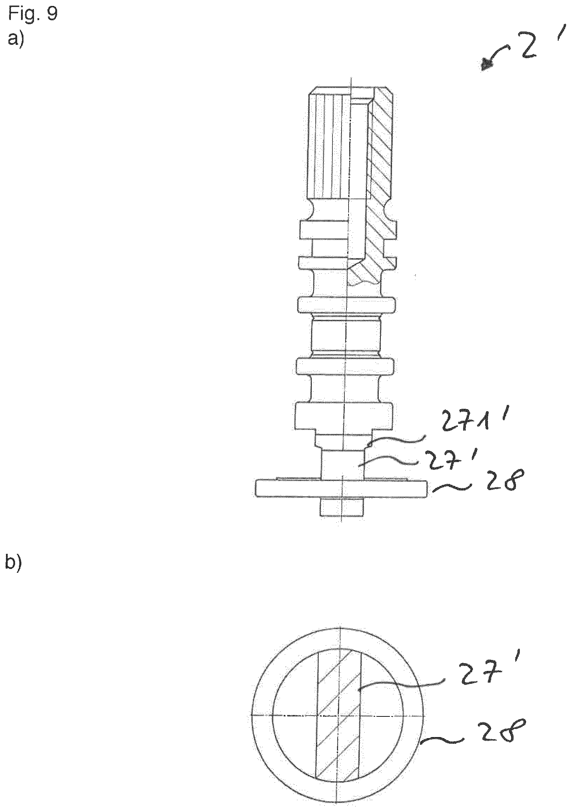

Figur 9 die schematische Darstellung der Spindel aus Figur 8 in um 90° verdrehter Position
   a) im Teilschnitt;
   b) im Querschnitt durch den Ausleger (Draufsicht).

Das als Ausschlussbeispiel gewählte Ventiloberteil weist ein Kopfstück 1 auf, das von einer in ihm radial geführten Spindel 2 mittig durchsetzt ist. Mit der Spindel 2 ist eine Steuerscheibe 3 formschlüssig verbunden und im Kopfstück 1 radial geführt. An dem der Spindel 1 abgewandten Ende der Steuerscheibe 3 ist eine Einlassscheibe 4 in dem Kopfstück 1 vorgesehen, an die sich eine Lippendichtung 5 anschließt, die mit dem Ventilsitz einer - nicht dargestellten - Armatur zur Anlage kommt.

Das Kopfstück 1 ist aus einem symmetrischen Hohlkörper gebildet, dessen beide Stirnflächen offen sind. Auf seiner der - nicht dargestellten - Armatur zugewandten Seite weist das Kopfstück 1 einen hülsenförmigen Teil 14 auf. In dem hülsenförmigen Teil 14 sind Durchtrittsfenster 11 vorgesehen, die von Längsstegen 12 begrenzt sind. Im Ausführungsbeispiel sind zwei durch Längsstege 12 begrenzte Fenster 11 angeordnet. Nach dem Einbringen des Kopfstücks 1 in eine Armatur liegt ein Bund 13 des Kopfstücks 1 auf dem Gehäuse der Armatur auf. Der Bund 13 weist auf seiner dem Durchtrittsfenster 11 zugewandten Seite eine Ringnut 15 zur Aufnahme eines O-Rings 151 auf. In dem hülsenförmigen Teil 14 ist innen im Bereich des dem Ventilsitz zugewandten Endes eine Hinterdrehung 16 angeordnet. An seinem dem Durchtrittsfenster 11 entgegengesetzten Ende ist an dem Kopfstück 1 ein Außengewinde 17 angeformt, an das sich ein Außensechskant 18 zum Eingriff eines Schraubwerkzeugs anschließt.

Die Spindel 2 ist im Wesentlichen massiv ausgeführt. Sie ist an ihrer dem Wasserzulauf abgewandten Stirnseite mit einem Griffanschluss 21 versehen, der außen als Außenvielkant 211 ausgeführt und mit einem Sackloch 212 mit Innengewinde für die Befestigung eines - nicht dargestellten - Drehgriffs versehen ist. An den Griffanschluss 21 schließt sich ein zylindrischer Abschnitt 22 an, mit dem die Spindel 2 in dem Kopfstück 1 radial geführt ist und in dem zwei Ringnuten 24 zur Aufnahme von O-Ringen 241 eingebracht sind, welche die Spindel 2 gegen das Kopfstück 1 abdichten. Zwischen den jeweils einen O-Ring 241 aufnehmenden Ringnuten 24 ist eine weitere Ringnut 25 zur Aufnahme einer Gleitbuchse 6 angeordnet. Zwischen dem Griffanschluss 21 und dem zylindrischen Abschnitts 22 ist weiterhin ein Einstich 23 vorgesehen, in den eine Wellensicherung 231 in Form eines Sprengrings federnd eingelegt ist.

An den zylindrischen Abschnitt 26 ist axial ein Ausleger 27 angeformt, der im Wesentlichen einen T-förmigen Querschnitt aufweist und der an einer Seite über den Durchmesser des zylindrischen Abschnitts 25 hinausragt. Durch den T-förmigen Querschnitt des Auslegers 27 ist an dessen Seitenwänden jeweils ein Überstand 271 gebildet. Der Ausleger 27 ist derart ausgebildet, dass er an zwei definierten Schwenkpositionen an jeweils einer Anschlagfläche 191 eines an der Innenwandung des Kopfstücks 1 angeformten Anschlags 19 mit einer Seitenfläche anliegt, wobei der an dieser Seitenfläche angeordnete Überstand 271 den Anschlag 19 mit geringem axialem Abstand überragt. An den Ausleger 27 ist eine Scheibe 28 angeformt, die auf ihrer der - nicht dargestellten - Armatur zugewandten Seite einen Mitnehmer 281 aufweist. Mit ihrer dem Mitnehmer 281 entgegengesetzten Oberseite liegt die Scheibe 28 an der dieser Scheibe 28 zugewandten Unterseite des in Form eines kreisbogenförmigen Steges ausgebildeten Anschlags 19 des Kopfstücks 1 an.

Die Steuerscheibe 3 ist im Wesentlichen als kreisrunde Scheibe ausgebildet, aus der ein Kreisausschnitt ausgenommen ist. Der Kreisausschnitt weist im Ausführungsbeispiel einen Winkel von ca. 180° auf. Auf ihrer der Spindel 2 zugewandten Oberseite ist die Steuerscheibe 3 weiterhin mit einer Aufnahme für den Mitnehmer 281 der Spindel 2 versehen.

An die Einlassscheibe 4 angrenzend ist in das Kopfstück 1 eine Lippendichtung 5 eingebracht, die außend umlaufend mit einem Steg 51 versehen ist, der in der endseitig in dem hülsenförmigen Teil 14 des Kopfstücks 1 hierfür vorgesehenen Hinterdrehung 16 eingreift. Die Lippendichtung 5 ist über einen eingebrachten Stützring 52 in ihrer Position gehalten, wobei die Lippen der Lippendichtung 5 dichtend gegen die Einlassscheibe 4 sowie gegen den - nicht dargestellten - Armatursitz anliegen.

Die Gleitbuchse 6 ist als ringförmiger Kunststoffkörper ausgebildet, der an einer Seite durch einen V-förmigen Schlitz 61 getrennt ist. Die Innenmantelfläche der Gleitbuchse 6 ist im Wesentlichen konvex ausgebildet und weist eine mittig angeordnete, umlaufende erste Kontaktfläche 62 auf. Der ersten Kontaktfläche 62 gegenüberliegend weist die Außenmantelfläche der Gleitbuchse 6 eine konkave Wölbung 63 auf, wodurch zwei parallel zueinander angeordnete, umlaufende zweite Kontaktflächen 64 begrenzt sind. Im montierten Zustand liegt die Gleitbuchse 6 mit der ersten Kontaktfläche 62 an dem Nutengrund der Ringnut 25 der Spindel 2 an, wobei sie mit ihren versetzt zu ersten Kontaktfläche angeordneten zweiten Kontaktflächen 64 an der Innenmantelfläche des Kopfstücks 1 anliegt. (Alternativ kann die Gleitbuchse 6 auch an ihrer Außenmantelfläche eine mittige zweite Kontaktfläche und auf ihrer Innenmantelfläche zwei parallel zueinander verlaufende, versetzt zu der inneren zweiten Kontaktfläche angeordnete erste Kontaktflächen aufweisen.) Auf diese Weise ist eine elastische und vollständig reversible Gleitbuchse 6 zwischen der Spindel 2 und dem Kopfstück 1 erzielt. Durch den V-förmigen Schlitz 61 ist die Gleitbuchse 6 einfach auf die Ringnut 25 der Spindel 2 aufclipsbar.

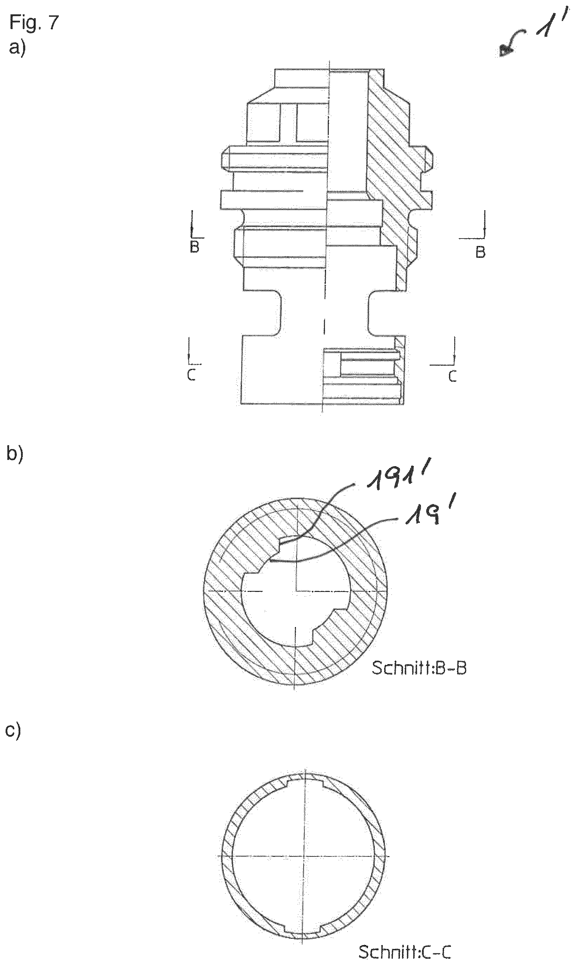

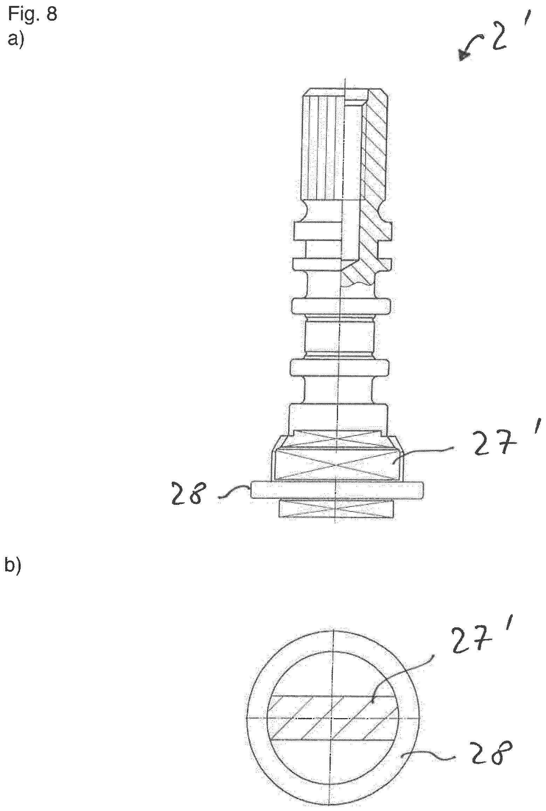

In den Figuren 7 und 8 sind Kopfstück und Spindel eines Ventiloberteils in einer weiteren Ausführungsform gezeigt, bei dem die Steuerscheibe einen Kreis-20 ausschnitt von ca. 90° aufweist und ein maximaler Drehwinkel der Spindel von 90° eingerichtet ist. Hierzu ist der Ausleger 27', der wiederum einen T-förmigen Querschnitt aufweist, wodurch an seinen beiden Seitenfläche jeweils ein Überstand 271' gebildet ist, derart ausgebildet, dass der an zwei diametral gegenüberliegenden Seiten über den Durchmesser des zylindrischen Abschnitts 25 der Spindel 2' hinausragt. Innerhalb des Kopfstücks 1 sind in diesem Ausführungsbeispiel gegenüberliegend zwei als kreisbogenförmige Stege ausgebildete Anschläge 19' angeordnet, an deren Anschlagflächen 191' in einer Anschlagposition der Spindel 2' jeweils eine Seitenfläche des Auslegers 27' endseitig anliegt. Hierbei überragt wiederum der an der jeweiligen Seitenfläche angeordnete Überstand 271' endseitig den Anschlag 19', an dem diese Seitenfläche anliegt, in geringem Abstand. In dieser Ausführungsform kann sich der Ausleger 27' folglich in jeder Anschlagstellung der Spindel 2' mit zwei Überständen 271' auf jeweils einem Anschlag 19' abstützen.

## Patentansprüche

1. Ventiloberteil, insbesondere für Sanitärarmaturen, mit einem in einem Ventilgehäuse einer Armatur befestigbaren, hülsenartigen Kopfstück (1), das von einer einen Griffanschluss aufweisenden, um ihre Längsachse drehbar gelagerten Spindel (2) mittig durchsetzt ist, über die ein Ventilkörper betätigbar ist, wobei in der Spindel (2) eine Nut (25) eingebracht ist, die eine die Spindel (2) zumindest bereichsweise radial umgreifende, elastische Gleitbuchse (6) aufnimmt, die zumindest bereichsweise an der Innenmantelfläche des Kopfstücks (1) anliegt, **dadurch gekennzeichnet, dass** die Gleitbuchse (6) derart gewölbt ist, dass sie nur bereichsweise sowohl an dem Nutengrund der Nut (25), als auch an der Innenmantelfläche des Kopfstücks (1) anliegt.

2. Ventiloberteil nach Anspruch 1, **dadurch gekennzeichnet, dass** die Gleitbuchse (6) aus Kunststoff, bevorzugt einem Elastomer hergestellt ist.

3. Ventiloberteil nach Anspruch 1 oder 2, **dadurch gekennzeichnet, dass** die Gleitbuchse (6) geschlitzt ausgebildet ist.

4. Ventiloberteil nach Anspruch 3, **dadurch gekennzeichnet, dass** der Schlitz (61) der Gleitbuchse (6) V-förmig ausgebildet ist.

5. Ventiloberteil nach einem der vorgenannten Ansprüche, **dadurch gekennzeichnet, dass** die Gleitbuchse (6) an dem Nutengrund der Nut (25) an wenigstens einer radial umlaufenden ersten Kontaktfläche anliegt und an der Innenmantelfläche des Kopfstücks (1) an wenigstens einer, bevorzugt zwei äußeren radial umlaufenden zweiten Kontaktflächen anliegt, die axial versetzt zu der wenigstens einen ersten Kontaktfläche angeordnet sind.

6. Ventiloberteil nach einem der vorgenannten Ansprüche, **dadurch gekennzeichnet, dass** die Gleitbuchse (6) auf den Nutengrund der Nut (25) aufclipsbar ist.

7. Ventiloberteil nach einem der vorgenannten Ansprüche, **dadurch gekennzeichnet, dass** die Spindel (2) zwei weitere, jeweils einen Dichtring (241) aufnehmende Nuten (24) aufweist, zwischen denen die Gleitbuchse (6) angeordnet ist.

## Claims

1. Upper part of a valve, in particular for sanitary fittings, having a sleeve-like head piece (1) mountable in a valve housing of a fitting, which is centrally penetrated by a spindle (2), which has a handle connection and is mounted to be rotatable about its longitudinal axis, via which a valve body can be operated, wherein a groove (25) is inserted in the spindle (2), which receives an elastic slide bush (6) at least partially radially enclosing the spindle (2), which rests on the inner surface of the head piece (1) at least in some areas, **characterised in that** the slide bush (6) is curved in such a manner that it only partially rests on the groove base of the groove (25) as well as on the inner surface of the head piece (1).

2. Upper part of a valve according to claim 1, **characterised in that** the slide bush (6) is made of plastic, preferably of an elastomer.

3. Upper part of a valve according to claim 1 or 2, **characterised in that** the slide bush (6) is slotted.

4. Upper part of a valve according to claim 3, **characterised in that** the slot (61) of the slide bush (6) is V-shaped.

5. Upper part of a valve according to one of the previous claims, **characterised in that** the slide bush (6) rests on the groove base of the groove (25) on at least one radially circumferential first contact surface and rests on the inner surface of the head piece (1) on at least one, preferably two outer radially circumferential second contact surfaces, which are arranged axially offset relative to the at least one first contact surface.

6. Upper part of a valve according to one of the previous claims, **characterised in that** the slide bush (6) can be clipped onto the groove base of the groove (25).

7. Upper part of a valve according to one of the previous claims, **characterised in that** the spindle (2) has two further grooves (24) each receiving a sealing ring (241), between which the slide bush (6) is arranged.

## Revendications

1. Partie supérieure de soupape, en particulier pour robinetteries sanitaires, comprenant une pièce têtière (1) en forme de douille pouvant être fixée dans le carter de soupape d'une robinetterie, pièce têtière qui est traversée en son centre par une broche (2) en appui rotatif autour de son axe longitudinal et présentant un raccord pour poignée, sachant que dans la broche (2) est ménagée une gorge (25) qui reçoit une douille de glissement (6) élastique entourant la broche (2) radialement au moins localement, douille qui applique au moins localement contre la surface enveloppante intérieure de la pièce têtière (1),
**caractérisée en ce que** la douille de glissement (6) est incurvée de sorte à n'appliquer que localement aussi bien contre le fond de la gorge (25) que contre la surface enveloppante intérieure de la pièce têtière (1).

2. Partie supérieure de soupape selon la revendication 1, **caractérisée en ce que** la douille de glissement (6) est fabriquée en matière plastique, de préférence en élastomère.

3. Partie supérieure de soupape selon la revendication 1 ou 2, **caractérisée en ce que** la douille de glissement (6) est configurée avec une fente.

4. Partie supérieure de soupape selon la revendication 3, **caractérisée en ce que** la fente (61) de la douille de glissement (6) est configurée en V.

5. Partie supérieure de soupape selon l'une des revendications précédentes, **caractérisée en ce que** la douille de glissement (6), au fond de la gorge (25), applique contre au moins une première surface de contact radialement périphérique et, au niveau de la surface enveloppante intérieure de la pièce têtière (1), applique contre au moins une, de préférence deux deuxièmes surfaces de contact externes radialement périphériques, qui sont disposées décalées axialement par rapport à au moins une première surface de contact.

6. Partie supérieure de soupape selon l'une des revendications précédentes, **caractérisée en ce que** la douille de glissement (6) peut être clipsée sur le fond de la gorge (25).

7. Partie supérieure de soupape selon l'une des revendications précédentes, **caractérisée en ce que** la broche (2) présente deux gorges (24) supplémentaires recevant chacune une bague d'étanchéité (241), gorges entre lesquelles est disposée la douille de glissement (6).
